# FASCICULE DE BREVET EUROPEEN

(11) **EP 4 327 431 B1**
(45) Date de publication et mention de la délivrance du brevet: **19.03.2025**
(21) Numéro de dépôt: 22716978.6
(22) Date de dépôt: 11.04.2022
(51) Int. Cl.: H02K 16/00, H02J 3/38, H02K 11/33, H02M 7/00

(54) **MODULE ÉLECTRIQUE CONFIGURÉ POUR ÊTRE RELIÉ À UN ARBRE DE PUISSANCE D'UNE TURBOMACHINE POUR AÉRONEF ET PROCÉDÉ D'ASSEMBLAGE D'UN TEL MODULE**
ELEKTRISCHES MODUL, DAS ZUR VERBINDUNG MIT EINER LEISTUNGSWELLE EINER TURBOMASCHINE FÜR FLUGZEUGE KONFIGURIERT IST, UND VERFAHREN ZUM ZUSAMMENBAU EINES SOLCHEN MODULS
ELECTRICAL MODULE CONFIGURED TO BE CONNECTED TO A POWER SHAFT OF AN AIRCRAFT TURBOMACHINE AND METHOD OF ASSEMBLING SUCH A MODULE

(30) Priorité: 18.04.2021 FR 2104010
(43) Date de publication de la demande: 28.02.2024
(73) Titulaire: Safran Electrical & Power, 31702 Blagnac (FR)
(72) Inventeur: DELBOSC, Philippe, 77550 MOISSY-CRAMAYEL (FR); MICHAUD, Benoit, 77550 MOISSY-CRAMAYEL (FR); MULLER, Udo, 77550 MOISSY-CRAMAYEL (FR); GONCALVES, Rémi, 77550 MOISSY-CRAMAYEL (FR); NEHME, Samir, 77550 MOISSY-CRAMAYEL (FR)
(74) Mandataire: Argyma
(86) Numéro de dépôt international: PCT/EP2022/059573
(87) Numéro de publication internationale: WO 2022/223337

(56) Documents cités:
- EP-A1- 3 276 774
- WO-A1-2020/115418
- FR-A1- 3 063 404
- FR-A1- 3 087 960
- FR-A1- 3 089 715
- US-A1- 2020 162 006

## Description

### Domaine technique

La présente invention concerne le domaine de l'hybridation d'une turbomachine d'aéronef et, plus particulièrement, un module électrique permettant une telle hybridation.

De manière connue, une turbomachine d'aéronef comporte un ou plusieurs arbres de puissance rotatifs (arbre basse pression, arbre haute pression, etc.) et il a été proposé d'utiliser une ou plusieurs machines électriques pour prélever et/ou injecter de la puissance sur le ou les arbres de puissance rotatifs en fonction des conditions de fonctionnement.

Une machine électrique permet, d'une part, de prélever l'énergie mécanique pour fournir de l'énergie électrique (fonctionnement générateur) et, d'autre part, de fournir de l'énergie mécanique à partir d'énergie électrique (fonctionnement moteur). Une machine électrique est associée traditionnellement à un convertisseur électrique relié à un réseau électrique. En fonctionnement générateur, le convertisseur permet de convertir l'énergie électrique issue de la machine électrique pour alimenter le réseau électrique. En fonctionnement moteur, le convertisseur permet d'alimenter la machine électrique à partir du réseau électrique.

Afin de limiter l'encombrement et de réduire la longueur de câblage, il a été proposé d'associer la machine électrique et son convertisseur dans un même module électrique, c'est-à-dire, dans un même ensemble. De manière avantageuse, la faible longueur de câblage entre la machine électrique et le convertisseur permet de réduire les surtensions en entrée de la machine électrique qui sont liées aux commutations du convertisseur. En pratique, le module électrique doit être installé à proximité des arbres de puissance, c'est-à-dire, dans des environnements thermiques et vibratoires qui sont sévères et qui augmentent le risque de pannes.

Pour limiter ce risque, il est connu de prévoir des redondances afin d'assurer une continuité de service. Une solution immédiate de redondance serait de prévoir deux modules électriques distincts mais cela pénalise l'encombrement et la masse de manière trop importante. Aussi, il a été proposé de fournir un module électrique comportant deux canaux fonctionnels indépendants, chaque canal fonctionnel ayant une partie de machine électrique et une partie de convertisseur. Autrement dit, le module électrique est partagé entre canaux qui peuvent fonctionner de manière individuelle ou de manière collective.

Bien qu'intéressante sur le plan de l'encombrement et de la masse, une telle solution présente néanmoins, du fait de la proximité des canaux fonctionnels, un risque élevé de propagation de panne d'un canal fonctionnel à un autre. Aussi, chaque élément d'un canal fonctionnel doit être intrinsèquement fiable en limitant le type et le nombre de défauts possible.

De manière connue, parmi les machines électriques, la machine à aimants permanents présente de nombreux atouts en termes de densité de puissance. Pour mémoire, une machine à aimants permanents comporte un rotor, équipé d'aimants, et un stator qui comporte des bobinages et des isolants.

Dans les faits, les isolants du stator peuvent présenter des défauts et sont susceptibles de générer un court-circuit dans les bobinages pouvant entrainer des échauffements, de la fumée ou un départ de feu. La probabilité de ce type de défaut augmente pour une application relative à l'hybridation d'une turbomachine d'aéronef étant donné que la tension d'alimentation est élevée, le convertisseur commute à des fréquences élevées (ce qui sollicite les bobinages) et la pression est faible en haute altitude (la basse pression étant susceptible de générer des décharges partielles entrainant la dégradation des isolants). De plus, étant donné que l'aimantation est permanente dans une machine à aimants permanents, il n'est pas possible de stopper immédiatement la source du court-circuit lors de la détection d'une défaillance tant que le rotor est entraîné.

Afin d'éliminer au moins certains de ces inconvénients, il est proposé un nouveau type de module électrique dont l'encombrement est réduit et comprenant deux canaux fonctionnels indépendants et limitant le risque de propagation de défaillance.

De manière incidente, on connaît dans l'art antérieur des dispositifs d'alimentation électrique par les demandes de brevet US2020162006A, FR3089715A1 et FR3087960A1.

### PRESENTATION DE L'INVENTION

L'invention concerne un module électrique configuré pour être relié à un arbre de puissance d'une turbomachine pour aéronef, le module électrique étant configuré pour prélever/injecter de la puissance sur ledit arbre de puissance, le module électrique comportant :
- Une machine électrique comprenant un boitier de machine dans lequel est monté un stator et un rotor configuré pour être relié mécaniquement à l'arbre de puissance, le boitier de machine ayant une forme cylindrique s'étendant selon un axe de cylindre,
- Un premier convertisseur électrique monté dans un premier boitier,
- Un deuxième convertisseur électrique monté dans un deuxième boitier, le deuxième convertisseur étant indépendant du premier convertisseur,

L'invention est remarquable par le fait que le premier boitier et le deuxième boitier se présentent chacun sous la forme d'un demi-cylindre s'étendant selon l'axe de cylindre de manière à former un ensemble cylindrique qui est monté dans le prolongement du boitier de machine de la machine électrique afin de limiter l'encombrement du module électrique.

Chaque convertisseur possède avantageusement son propre boitier et est monté à égale distance de la machine électrique, ce qui permet une conversion homogène entre chaque onduleur. La propagation de défauts est avantageusement réduite étant donné que les boitiers sont indépendants.

De préférence, chaque boitier comporte une enveloppe incurvée, un capot latéral et un capot central. Un tel boitier possède une accessibilité importante, notamment, par l'ouverture fermée par le capot central afin de pouvoir monter les éléments du convertisseur de manière pratique et précise.

De préférence, les capots centraux des boitiers sont positionnés en contact de manière à limiter l'encombrement et permettre une association robuste.

De manière préférée, chaque convertisseur comporte au moins deux onduleurs de puissance et la machine électrique comporte un stator comportant au moins quatre étoiles connectées auxdits onduleurs de puissance. Ainsi, chaque convertisseur peut participer à la formation du courant statorique. Une telle architecture permet à la machine électrique de pouvoir fonctionner même en cas de panne d'un des convertisseurs.

De préférence, chaque onduleur de puissance est triphasé et relié à une étoile. De préférence encore, la machine électrique comporte un stator comprenant des bobinages reliés 3 par 3. De préférence encore, le stator forme 4 étoiles qui sont connectées aux quatre onduleurs de puissance triphasés.

De préférence, chaque convertisseur comporte uniquement deux onduleurs de puissance et la machine électrique comporte un stator comportant uniquement quatre étoiles connectées auxdits onduleurs de puissance (deux onduleurs pour chacun des deux convertisseurs). Un tel module électrique possède une structure optimale.

Selon un aspect de l'invention, chaque convertisseur comporte un onduleur de puissance et la machine électrique comporte un stator comportant au moins deux étoiles connectées auxdits onduleurs de puissance. Un onduleur est ainsi connecté à une seule étoile.

Selon un premier aspect, les étoiles étant réparties angulairement dans le stator, de préférence de manière uniforme, les deux onduleurs de puissance d'un convertisseur sont connectés aux étoiles avec lesquelles ils sont alignés. Ainsi, les connexions électriques sont courtes et dénuées de croisement, ce qui augmente la fiabilité et réduit la probabilité de défaut. Autrement dit, les étoiles sont directement connectées avec le convertisseur avec lequel les étoilées sont alignées. Les deux onduleurs de puissance d'un convertisseur sont connectés à des étoiles adjacentes.

Selon un deuxième aspect, les étoiles étant réparties angulairement dans le stator, de préférence de manière uniforme, les deux onduleurs de puissance d'un convertisseur ne sont pas connectés aux étoiles avec lesquelles ils sont alignés. Les deux onduleurs de puissance d'un convertisseur sont connectés à des étoiles distantes, de préférence, à des étoiles diamétralement opposées. Ainsi, les convertisseurs alimentent individuellement la machine électrique de manière symétrique, ce qui permet de prélever/injecter de la puissance de manière plus homogène sur un arbre de puissance, améliorant ainsi la durée de vie de la turbomachine. Autrement dit, les étoiles ne sont pas directement connectées avec le convertisseur avec lequel les étoiles sont alignées. Deux étoiles diamétralement opposées sont de préférence connectées à un même convertisseur.

De préférence, chaque convertisseur comporte au moins un condensateur en forme de demi-cylindre. Un tel condensateur permet d'utiliser de manière optimale l'espace disponible afin de remplir sa fonction.

De manière préférée, les convertisseurs sont montés de manière amovible dans le module électrique, ce qui facilite la maintenance et limite la propagation des défauts.

De manière préférée, chaque convertisseur électrique comporte au moins un filtre d'entrée. De préférence, le filtre d'entrée comportant une pluralité d'inductances, chaque convertisseur électrique comporte au moins un bornier de connexion relié aux inductances sans croisement. Tout croisement de câbles électriques de liaison est évité, ce qui limite le risque de défaut.

De préférence, chaque convertisseur électrique comporte au moins une carte électronique d'interface configurée pour commander les onduleurs de puissance.

L'invention concerne également un procédé d'assemblage d'un module électrique, tel que présenté précédemment, comprenant des étapes:
- d'assemblage du premier boitier du premier convertisseur avec le deuxième boitier du deuxième convertisseur afin de former un ensemble cylindrique et
- d'assemblage dudit ensemble dans le prolongement du boitier de machine de la machine électrique.

L'invention concerne également un ensemble d'un module électrique, tel que présenté précédemment, et d'un arbre de puissance d'une turbomachine pour aéronef, le rotor de la machine électrique étant relié mécaniquement à l'arbre de puissance pour prélever/injecter de la puissance sur ledit arbre de puissance. L'invention concerne en outre un aéronef comprenant un ensemble tel que présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un module électrique selon une forme de réalisation de l'invention monté sur un arbre de puissance d'une turbomachine d'aéronef.
La [Fig.2] est une représentation fonctionnelle schématique du module électrique.
La [Fig.3] est une représentation schématique en perspective d'un module électrique avec deux convertisseurs.
La [Fig.4] est une représentation schématique du module électrique de la [Fig.3] sans le premier convertisseur.
La [Fig.5] est une représentation schématique du module électrique de la [Fig.3] sans le deuxième convertisseur.
La [Fig.6] est une représentation schématique en perspective de l'enveloppe incurvée du premier boitier du premier convertisseur.
La [Fig.7] est une représentation schématique du montage d'un flasque isolant.
La [Fig.8] est une représentation schématique du montage d'un premier ensemble d'unités d'onduleur de puissance.
La [Fig.9] est une représentation schématique du montage d'un deuxième ensemble d'unités d'onduleur de puissance.
La [Fig.10] est une représentation schématique du montage de cartes électroniques de commande rapprochée.
La [Fig.11] est une représentation schématique du montage d'un condensateur.
La [Fig.12] est une représentation schématique du montage d'une plaque de support.
La [Fig.13] est une représentation schématique du montage d'une carte électronique d'interface.
La [Fig.14] est une représentation schématique du montage d'un filtre d'entrée.
La [Fig.15] est une représentation schématique du montage des capots pour fermer le premier boitier.
La [Fig.16] est une représentation schématique depuis l'avant des deux convertisseurs montés ensemble.
La [Fig.17] est une représentation schématique du bobinage du stator de la machine électrique.
La [Fig.18] est une représentation schématique d'un exemple d'interconnexion du stator avec les convertisseurs.
La [Fig.19] est une représentation schématique d'un autre exemple d'interconnexion du stator avec les convertisseurs.
La [Fig.20] est une représentation schématique d'une structure périphérique du stator sans bobines.
La [Fig.21] est une représentation schématique du montage de trois bobines.
La [Fig.22] est une représentation schématique de l'ensemble des bobines sans la structure périphérique.
La [Fig.23] est une représentation schématique d'une structure périphérique comportant des encoches rectangulaires.

L'invention est définie par les revendications indépendantes. Les modes de réalisation préférés sont définis par les revendications dépendantes.

### DESCRIPTION DETAILLEE

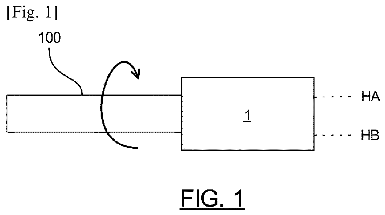

En référence à la [Fig.1], il est représenté un arbre de puissance 100 d'une turbomachine pour aéronef, en particulier, un arbre basse pression ou haute pression. Selon l'invention, un module électrique 1 est relié à l'arbre de puissance 100 pour prélever/injecter de la puissance sur ledit arbre de puissance 100.

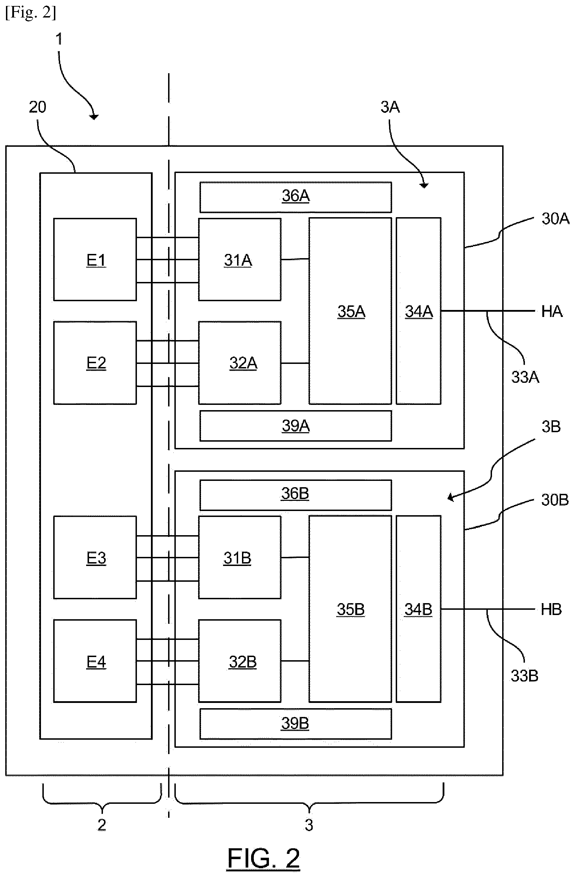

Comme illustré à la [Fig.2], le module électrique 1 comporte une machine électrique 2, un premier convertisseur électrique 3A et un deuxième convertisseur électrique 3B qui sont indépendants et définissent ainsi deux canaux fonctionnels.

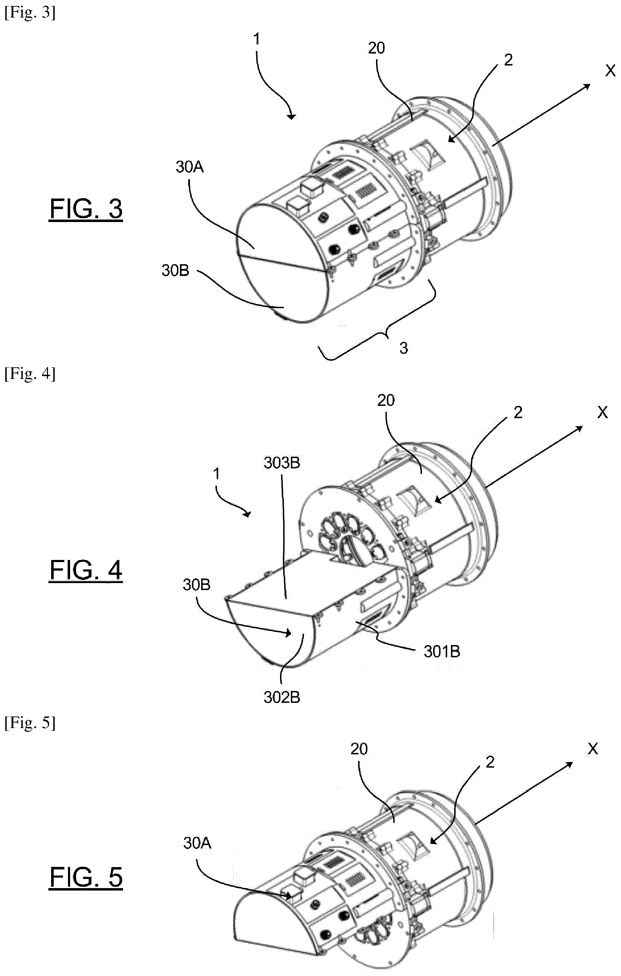

La machine électrique 2 comprend un boitier de machine 20 dans lequel est monté un stator et un rotor configuré pour être relié mécaniquement à l'arbre de puissance 100. La machine électrique 2 est configurée pour fonctionner en tant que moteur ou générateur. Comme illustré à la [Fig.3], le boitier de machine 20 possède une forme de cylindre, qui est adapté pour une machine tournant autour de l'axe du cylindre. La machine électrique 2 sera présentée plus en détails par la suite.

Comme représenté à la [Fig.2], le premier convertisseur électrique 3A est monté dans un premier boitier 30A et configuré pour réaliser une conversion électrique entre la machine électrique 2 et un premier réseau électrique HA. Le deuxième convertisseur électrique 3B est monté dans un deuxième boitier 30B et configuré pour réaliser une conversion électrique entre la machine électrique 2 et un deuxième réseau électrique HB, le deuxième convertisseur 3B étant indépendant du premier convertisseur 3A.

Selon l'invention, comme représenté aux figures 3 à 5, le premier boitier 30A et le deuxième boitier 30B se présentent chacun sous la forme d'un demi-cylindre de manière à former ensemble un convertisseur global, comprenant deux canaux fonctionnels, de forme cylindrique. Ce dernier peut ainsi être monté dans le prolongement du boitier de machine 20 afin de former un module électrique 1 d'encombrement réduit.

Grâce à l'invention, les deux convertisseurs 3A, 3B sont indépendants mais n'augmentent pas l'encombrement global du module électrique 1 afin de former un ensemble compact. L'utilisation de boitiers en demi-cylindres 30A, 30B permet de faciliter l'assemblage des convertisseurs 3A, 3B et d'augmenter la séparation fonctionnelle et structurelle pour limiter la propagation des défauts entre convertisseurs 3A, 3B. La complémentarité des formes permet en outre de faciliter l'interface avec la machine électrique 2 qui demeure cylindrique.

Les différents éléments du module électrique 1 vont être dorénavant présentés en détails.

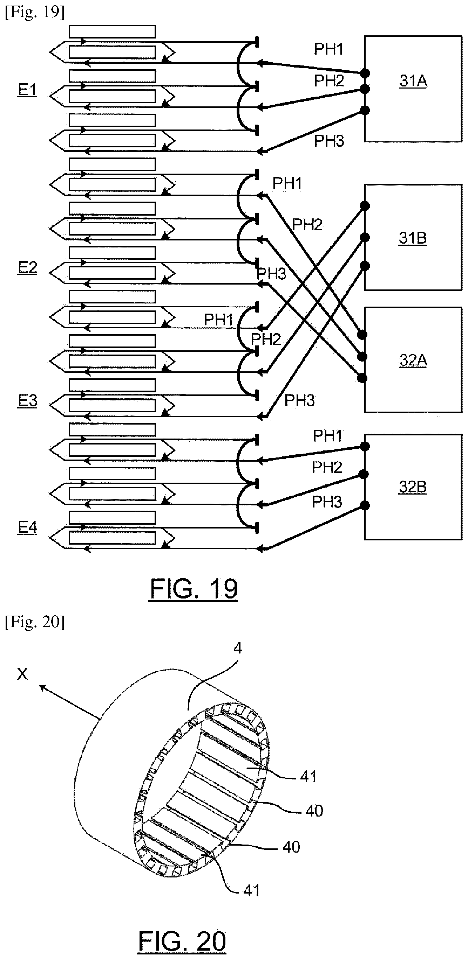

Comme illustré à la [Fig.2], la machine électrique 2 comporte un stator comportant quatre étoiles à trois branches E1-E4. Le rotor de la machine électrique 2 n'est pas représenté dans cet exemple. Selon un aspect préféré, la machine électrique 2 est du type à aimants permanents. Comme indiqué précédemment, une telle machine électrique présente de nombreux atouts en termes de densité de puissance. La structure du stator sera présentée par la suite en référence aux figures 20 à 23.

Le premier convertisseur 3A est représenté de manière schématique à la [Fig.2]. Le premier convertisseur 3A est monté dans un premier boitier 30A qui sera présenté plus en détails par la suite. Dans cet exemple, le premier convertisseur 3A comporte deux onduleurs triphasés 31A, 32A qui sont entrelacés de manière à relier un premier bus 33A, relié au premier réseau électrique HA, à deux étoiles E1-E2 de la machine électrique 2. La connexion entre les onduleurs 31A, 32A et le bobinage de la machine électrique 2 sera présentée par la suite.

De manière connue, le premier convertisseur 3A comporte en outre un filtre d'entrée 34A, un condensateur 35A, des cartes électroniques de commande rapprochée 36A des onduleurs 31A, 32A ainsi qu'une ou plusieurs cartes électroniques d'interface 39A, 39B.

Le deuxième convertisseur 3B est analogue et sa structure interne ne sera pas présentée en détails. Les éléments du deuxième convertisseur 3B sont référencés de manière analogue qui sont terminés par l'indice B.

Comme illustré aux figures 3 à 5, le boitier de machine 20 de la machine électrique 2 possède une forme cylindrique afin de loger le rotor de manière centrale et le stator de manière périphérique extérieurement au rotor. Par la suite, le cylindre, dont le boitier de machine 20 a la forme, s'étend selon un axe X orienté de l'arrière vers l'avant. Par la suite, les termes « intérieur » et « extérieur » sont définis radialement par rapport à l'axe X.

Le premier boitier 30A et le deuxième boitier 30B des convertisseurs 3A, 3B se présentent chacun sous la forme d'un demi-cylindre de manière à former ensemble un cylindre qui est monté dans le prolongement du boitier de machine 20 afin de former un module électrique 1 d'encombrement réduit. Dans cet exemple, les convertisseurs 3A, 3B sont solidarisés ensemble. Chaque boitier 30A, 30B comporte une bride avant de montage pour se solidariser au boitier de machine 20 de la machine électrique 2.

De manière avantageuse, chaque convertisseur 3A, 3B dispose de son propre boitier 30A, 30B qui est indépendant. Les boitiers 30A, 30B peuvent ainsi être montés/ démontés de manière indépendante, ce qui facilite la maintenance.

Comme illustré à la [Fig.4], le deuxième boitier 30B comporte une enveloppe incurvée 301B, un capot latéral 302B (capot arrière), qui s'étend orthogonalement à l'axe X, et un capot central 303B qui s'étend parallèlement à l'axe X. Le deuxième boitier 30B est ouvert du côté de sa face latérale (face avant) débouchant sur la machine électrique 2. Le premier boitier 30A est de structure analogue.

Cette configuration en demi-cylindre permet, d'une part, d'éviter la propagation d'un défaut entre deux convertisseurs 3A, 3B et, d'autre part, de faciliter l'industrialisation et la fabrication. En effet, le montage des éléments d'un convertisseur 3A, 3B à l'intérieur d'un boitier 30A, 30B est facilité grâce à un accès depuis les 3 côtés (faces latérales et face plane), comme cela sera présenté par la suite. Une telle solution est avantageuse par comparaison à un boitier cylindrique pour lequel l'accès n'est possible que depuis les faces latérales.

Il va être présenté un exemple de mise en œuvre d'un procédé d'assemblage d'un convertisseur 3A, 3B, en particulier, du premier convertisseur 3A.

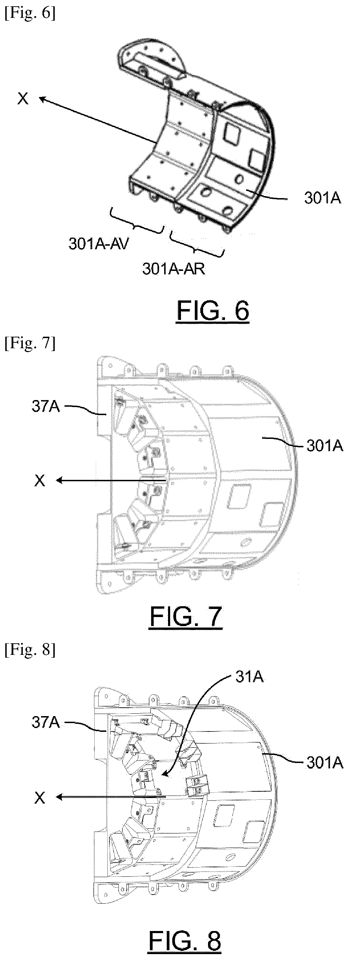

En référence à la [Fig.6], il est représenté uniquement l'enveloppe incurvée 301A du premier boitier 30A qui est accessible depuis les deux faces latérales (face avant débouchant sur la machine électrique 2 et face arrière qui n'est pas fermée en l'absence de capot latéral 302A). Du fait de son accessibilité, des composants peuvent être positionnés de manière pratique et précise dans l'enveloppe incurvée 301A. Dans cet exemple, l'enveloppe incurvée 301A comporte une partie avant 301A-AV tournée vers la machine électrique 2 et une partie arrière 301A-AR qui débouche sur la face arrière.

Les étapes de montage vont être présentées en référence aux figures 7 à 14.

Tout d'abord, un flasque isolant électrique 37A est monté dans la partie avant 301A-AV de l'enveloppe incurvée 301A ([Fig.7]), en particulier, au niveau de la face avant. Le flasque 37A intègre les connecteurs destinés à être reliés aux onduleurs 31A, 32A. Dans cet exemple, le flasque 37A est positionné transversalement à l'axe X et comporte des parois de séparation configurées pour recevoir les onduleurs 31A, 32A. Le flasque 37A est destiné à venir en contact avec la machine électrique 2.

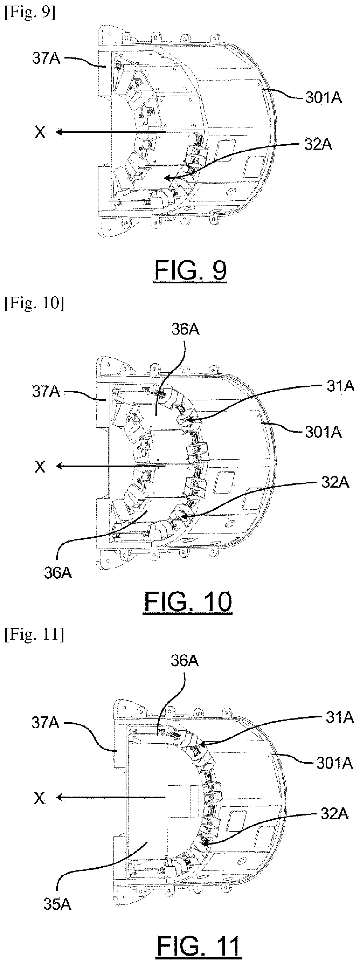

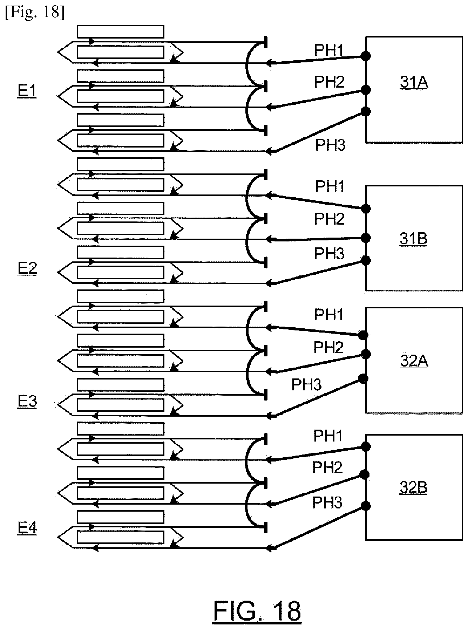

Comme illustré aux figures 8 et 9, des onduleurs de puissance 31A, 32A sont ensuite positionnés à la périphérie interne de l'enveloppe incurvée 301A de manière à maximiser le transfert de calories. Selon un aspect préféré, l'enveloppe incurvée 301A comporte des canaux de fluide de refroidissement (par exemple de l'huile), des ailettes de refroidissement ou d'autres moyens de refroidissement. Chaque onduleur de puissance 31A, 32A comporte trois unités qui correspondent chacun à un bras d'onduleur. Les onduleurs de puissance 31A, 32A sont positionnés directement en regard des branches des étoiles E1-E2 avec lesquelles ils sont connectés (configuration [Fig.18]). De manière alternative, le flasque isolant électrique 37A pourrait être positionné après les onduleurs de puissance 31A, 32A.

Des cartes électroniques de commande rapprochée 36A, connues également de l'homme du métier sous la désignation de « drivers », sont positionnées intérieurement par rapport aux onduleurs 31A, 32A comme illustré à la [Fig.10]. Cela permet de manière avantageuse de limiter la présence de haute tension dans cette zone. Il va de soi que les cartes électroniques de commande rapprochée 36A pourraient également être intégrées dans les onduleurs 31A, 32A.

Ensuite, en référence à la [Fig.11], un condensateur 35A est monté intérieurement aux cartes électroniques de commande rapprochée 36A et en arrière du flasque 37A de manière à assurer une liaison entre les onduleurs de puissance 31A, 32A et le filtre d'entrée 34A qui sera placé à l'arrière. De manière avantageuse, le condensateur 35A comporte une forme de demi-cylindre de manière à remplir sa fonction de manière optimale compte tenu de l'espace disponible.

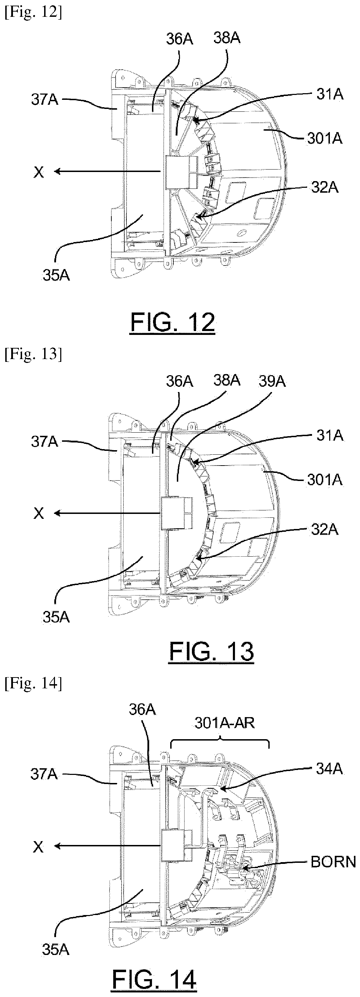

Afin de placer le filtre d'entrée 34A, en référence à la [Fig.12], une plaque de support 38A, en forme de demi-disque, est positionnée à l'arrière du condensateur 35A, de manière transversale, afin de permettre le support du condensateur 35A et l'évacuation des calories du condensateur 35A vers l'enveloppe incurvée 301A. La plaque de support 38A comporte des ouvertures traversantes afin de permettre le passage de connecteurs des cartes électroniques de commande rapprochée 36A.

Comme illustré à la [Fig.13], une ou plusieurs cartes électroniques d'interface 39A sont positionnées en arrière de la plaque de support 38A et reliées aux connecteurs des cartes électroniques de commande rapprochée 36A de manière à les commander. Dans cet exemple, une carte électronique d'interface 39A est positionnée transversalement contre la plaque de support 38A. De manière optionnelle, d'autres cartes électroniques peuvent être prévues, par exemple, une carte de filtrage foudre.

Un filtre d'entré 34A est ensuite fixé dans la partie arrière 301A-AR ([Fig.14]), ce filtre d'entrée 34A comporte un ensemble d'éléments de filtre de mode commun et de mode différentiel qui sont, de préférence, formés par des inductances fixées sur la face intérieure de l'enveloppe incurvée 301A et reliées à un bornier de connexion BORN. Le bornier BORN et les inductances sont disposés de façon à permettre une distribution interne du câblage sans croisement jusqu'au condensateur 35A, limitant ainsi les modes de défaut ainsi que la longueur du câblage. Autrement dit, il n'existe pas de croisement entre les inductances du filtre d'entrée 34A et le bornier de connexion BORN mais également entre les inductances du filtre d'entrée 34A et le condensateur 35A afin de limiter le risque de défaut.

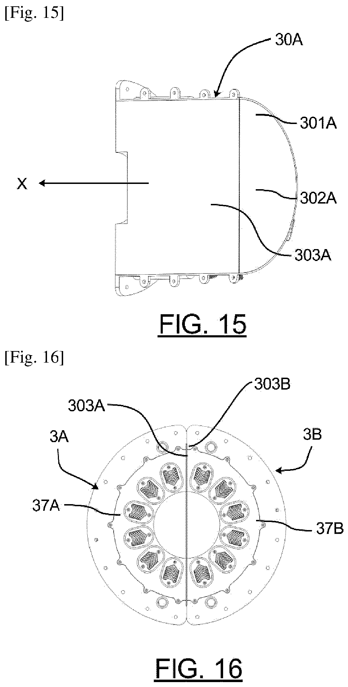

Enfin, en référence à la [Fig.15], le premier boitier 30A est ensuite fermé par la mise en place du capot latéral 302A et du capot central 303A de manière à former le premier convertisseur 3A qui peut être manipulé de manière indépendante.

Comme illustré à la [Fig.3], le premier boitier 30A et le deuxième boitier 30B peuvent être assemblés ensemble afin de mettre en contact leurs capots centraux 303A, 303B. On forme ainsi un convertisseur global comportant deux canaux fonctionnels indépendants. Comme illustré à la [Fig.16], la forme cylindrique globale du convertisseur global permet de le connecter de manière pratique à la machine électrique 2. L'extrémité avant du convertisseur global permet de rendre accessible les deux flasques isolants 37A, 37B des deux convertisseurs 3A, 3B qui peuvent ainsi coopérer de manière pratique avec la machine électrique 2.

La machine électrique 2 va être dorénavant présentée plus en détails. Comme présenté précédemment, la machine électrique 2 comporte un stator qui comporte quatre étoiles à trois branches E1-E4. Les étoiles E1-E4 sont réparties angulairement, chaque étoile E1-E4 étant diamétralement opposé à une autre étoile. Par la suite, on divise les étoiles E1-E4 entre deux groupes qui correspondent respectivement aux deux demi-cylindres formés par les convertisseurs 3A, 3B. Chaque groupe d'étoiles est aligné avec un des demi-cylindres.

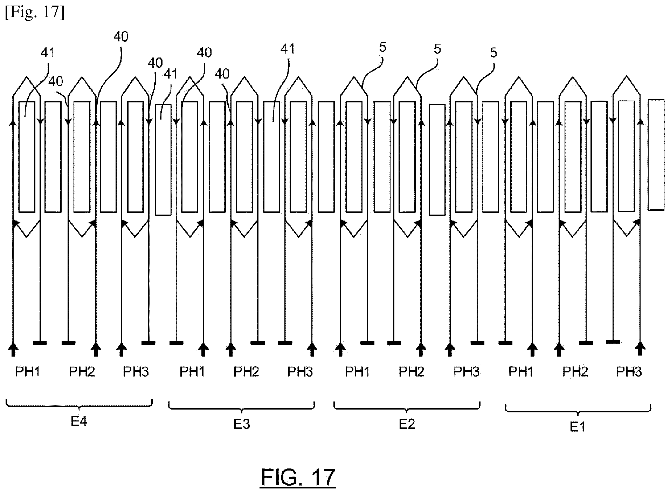

En référence à la [Fig.17], il est présenté un exemple de bobinage en projection périphérique à plat (vue « déroulée »). Dans cet exemple, il est représenté une structure périphérique 4 dans lequel sont formées 24 encoches 40 pour le montage de 12 bobines 5 de forme annulaire. Deux encoches consécutives 40 délimitent entre elles une dent 41 permettant de supporter le bobinage. Chaque bobine 5 comporte une phase PH1-PH3 à connecter. De manière connue, chaque bobine 5 comporte plusieurs spires. Chaque étoile E1-E4 comporte ainsi trois phases PH1-PH3. Dans cet exemple, il y a une seule phase PH1-PH3 par encoche 40, c'est-à-dire, une spire s'étend à l'aller dans une encoche 40 et s'étend au retour dans une encoche adjacente 40. Les phases PH1-PH3 de chaque étoile E1-E4 sont écartées, ce qui diminue le risque de court-circuit.

L'architecture de bobinage retenue permet de limiter naturellement les défauts possibles sans recourir à un système d'isolation complexe. Une telle architecture de bobinage permet de limiter tous les défauts de manière synergique avec la structure innovante des convertisseurs 3A, 3B. Comme observé à la [Fig.17], l'architecture de bobinage permet :
- d'augmenter le plus possible la distance entre des phases PH1-PH3 différentes,
- d'ordonner les spires d'une même encoche 40 de façon à diminuer la tension électrique entre deux spires d'une même encoche 40, afin de réduire la contrainte sur l'isolant pour ne pas le surdimensionner, et
- de limiter le nombre de croisements de spires dans les têtes de bobines, chaque croisement étant une source de défaut possible et nécessitant un renforcement local du système d'isolation.

Un exemple d'interconnexion électrique du bobinage avec les convertisseurs 3A, 3B est représenté de manière schématique à la [Fig.18]. En ce qui concerne les interconnexions des étoiles E1-E4 avec les convertisseurs 3A, 3B, des connexions directes sont privilégiées avec des longueurs de connexion minimale. Ainsi, les onduleurs 31A, 32A, 32A, 32B sont respectivement connectés aux étoiles E1-E4. Dans cet exemple, chaque convertisseur 3A, 3B commande des étoiles E1/E2 et E3/E4 du stator qui appartiennent à un même groupe. Les croisements de spires sont évités. Malgré la séparation des convertisseurs 3A, 3B en demi-cylindres, la connexion à la machine électrique 2 n'engendre pas une augmentation des défauts, ni de la complexité.

Un autre exemple d'interconnexion électrique du bobinage avec les convertisseurs 3A, 3B est représenté de manière schématique à la [Fig.19]. Dans cet exemple, chaque convertisseur 3A, 3B commande des étoiles E1-E4 du stator qui appartiennent à des groupes différents, en particulier, deux étoiles diamétralement opposées E1/E3 et E2/E4.

Une telle configuration est avantageuse étant donné qu'elle permet d'assurer une symétrie de fonctionnement, ce qui est bénéfique lors d'un prélèvement ou d'une injection de puissance sur un arbre de turbomachine 100. En cas de panne, des étoiles appartenant à des groupes différents permettent le passage de courant, ce qui évite la génération d'un couple tangentiel sur uniquement 180° dans la machine électrique 2. En l'absence de panne, une symétrie est également avantageuse étant donné que la puissance transitant par chaque convertisseur 3A, 3B n'est pas toujours identique. L'utilisation d'étoiles opposées E1/E3 et E2/E4 par un même convertisseur 3A, 3B permet de rendre symétrique l'utilisation. De manière préférée, une isolation complémentaire est ajoutée au niveau du croisement des connecteurs liés aux onduleurs 31B et 32A.

Un exemple de réalisation d'un stator de la machine électrique 2 va être présenté en référence aux figures 20 à 23. Le stator possède une structure périphérique 4 comportant sur sa surface interne 24 encoches longitudinales 40 régulièrement espacées. Deux encoches 40 consécutives délimitent entre elles une dent 41 permettant de supporter les bobines 5. Dans cet exemple, 12 bobines 5 sont placées dans la structure périphérique 4.

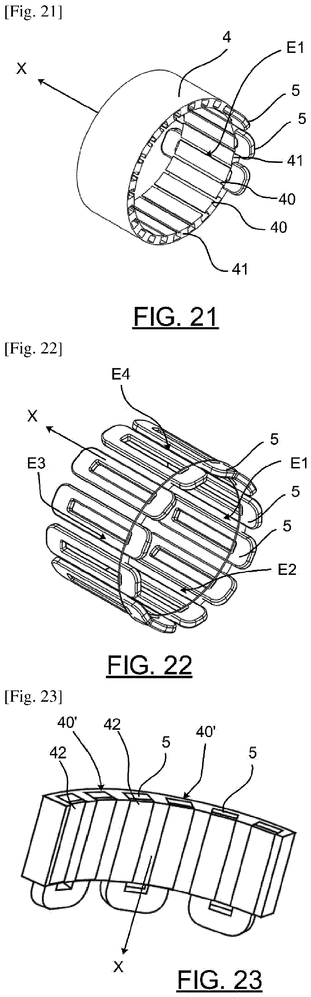

Comme illustré sur les figures 21 et 22, chaque bobine 5 possède une forme annulaire allongée et s'étend dans deux encoches consécutives 40 de la structure périphérique 4. Chaque bobine 5 comporte dans cet exemple 16 spires mais il va de soi que le nombre de spires pourrait être différent. Chaque spire comporte un ou plusieurs fils conducteurs en parallèle. De préférence, chaque fil conducteur possède une section ronde ou rectangulaire. Il va de soi que le nombre d'encoches 40 et de bobines 5 pourrait être différent.

Comme illustré à la [Fig.22], avec les 12 bobines 5, on peut former 4 étoiles triphasées E1-E4. Des connecteurs électriques (non représentés) sont également prévus pour connecter les phases PH1-PH3 des étoiles E1-E4 avec les convertisseurs 3A, 3B.

Dans cet exemple, comme représenté à la [Fig.20], les encoches longitudinales 40 possèdent une section sensiblement en queue d'aronde mais il va de soi que les encoches 40 pourraient avoir une section rectangulaire. Dans ce dernier cas, comme représenté à la [Fig.23], les bobines 5 sont insérées dans des encoches rectangulaires 40' qui sont refermées par des cales d'encoche 42. De préférence, l'ensemble subit ensuite une imprégnation sous vide de résine pour permettre une solidarisation. La machine électrique 2 ainsi formée permet de tenir compte de manière avantageuse des spécificités avantageuses des convertisseurs 3A, 3B sans affecter les performances ni augmenter le risque de défaut.

Pour assembler le module électrique 1, en référence à la [Fig.3], il suffit de solidariser ensemble le boitier machine 20, le premier boitier 30A et le deuxième boitier 30B. Le module électrique 1 peut être assemblé de manière pratique et rapide en assemblant ensemble les convertisseurs 3A, 3B et en les montant dans le prolongement de la machine électrique 2. Le module électrique 1 possède ainsi un encombrement limité, ce qui est avantageux dans un contexte aéronautique.

En référence à la [Fig.1], en fonctionnement moteur, les réseaux HA, HB alimentent séparément les convertisseurs 3A, 3B qui alimentent respectivement des étoiles distinctes E1-E4 de la machine électrique 2 formant ainsi des canaux fonctionnels distincts. En cas de dysfonctionnement d'une des étoiles E1-E4 ou d'un des convertisseurs 3A, 3B, la redondance est assurée sans risque de propagation de défaut.

## Revendications

1. Module électrique (1) configuré pour être relié à un arbre de puissance (100) d'une turbomachine pour aéronef, le module électrique (1) étant configuré pour prélever/injecter de la puissance sur ledit arbre de puissance (100), le module électrique (1) comportant :
• Une machine électrique (2) comprenant un boitier de machine (20) dans lequel est monté un stator et un rotor configuré pour être relié mécaniquement à l'arbre de puissance (100), le boitier de machine (20) ayant une forme cylindrique s'étendant selon un axe de cylindre (X),
• Un premier convertisseur électrique (3A) monté dans un premier boitier (30A),
• Un deuxième convertisseur électrique (3B) monté dans un deuxième boitier (30B), le deuxième convertisseur (3B) étant indépendant du premier convertisseur (3A),
• Module électrique **caractérisé par le fait que** le premier boitier (30A) et le deuxième boitier (30B) se présentent chacun sous la forme d'un demi-cylindre s'étendant selon l'axe de cylindre (X) de manière à former un ensemble cylindrique qui est monté dans le prolongement du boitier de machine (20) de la machine électrique (2) afin de limiter l'encombrement du module électrique (1).

2. Module électrique (1) selon la revendication 1 dans lequel chaque boitier (30A, 30B) comporte une enveloppe incurvée (301A, 301B), un capot latéral (302A, 302B) et un capot central (303A, 303B).

3. Module électrique (1) selon la revendication 2 dans lequel les capots centraux (303A, 303B) des boitiers (30A, 30B) sont positionnés en contact.

4. Module électrique (1) selon l'une des revendications 1 à 3 dans lequel chaque convertisseur (3A, 3B) comporte au moins deux onduleurs de puissance (31A, 32A, 31B, 32B) et la machine électrique (2) comporte un stator comportant au moins quatre étoiles (E1-E4) connectées auxdits onduleurs de puissance (31A, 32A, 31B, 32B).

5. Module électrique (1) selon la revendication 4 dans lequel, les étoiles (E1-E4) étant réparties angulairement dans le stator, les deux onduleurs de puissance (31A, 32A, 31B, 32B) d'un convertisseur (3A, 3B) sont connectés aux étoiles (E1-E4) avec lesquelles ils sont alignés.

6. Module électrique (1) selon la revendication 4 dans lequel, les étoiles (E1-E4) étant réparties angulairement dans le stator, les deux onduleurs de puissance (31A, 32A, 31B, 32B) d'un convertisseur (3A, 3B) sont connectés à des étoiles (E1-E4) qui sont diamétralement opposées.

7. Module électrique (1) selon l'une des revendications 1 à 6 dans lequel chaque convertisseur (3A, 3B) comporte au moins un condensateur (35A, 35B) en forme de demi-cylindre.

8. Module électrique (1) selon l'une des revendications 1 à 7 dans lequel les convertisseurs (3A, 3B) sont montés de manière amovible dans le module électrique (1).

9. Module électrique (1) selon l'une des revendications 1 à 8 dans lequel chaque convertisseur électrique (3A, 3B) comporte au moins un filtre d'entrée (34A, 34B).

10. Module électrique (1) selon la revendication 9 dans lequel, le filtre d'entrée (34A, 34B) comportant une pluralité d'inductances, chaque convertisseur électrique (3A, 3B) comporte au moins un bornier de connexion (BORN) relié aux inductances sans croisement.

11. Module électrique (1) selon l'une des revendications 4 à 10 dans lequel chaque convertisseur électrique (3A, 3B) comporte au moins une carte électronique d'interface (39A, 39B) configurée pour commander les onduleurs de puissance (31A, 32A, 31B, 32B).

12. Procédé d'assemblage d'un module électrique (1) selon l'une des revendications 1 à 11, comprenant des étapes :
• d'assemblage du premier boitier (30A) du premier convertisseur (3A) avec le deuxième boitier (30B) du deuxième convertisseur (3B) afin de former un ensemble cylindrique et
• d'assemblage dudit ensemble dans le prolongement du boitier de machine (20) de la machine électrique (2).

13. Ensemble d'un module électrique (1), selon l'une des revendications 1 à 11, et d'un arbre de puissance (100) d'une turbomachine pour aéronef, le rotor de la machine électrique (2) étant relié mécaniquement à l'arbre de puissance (100) pour prélever/injecter de la puissance sur ledit arbre de puissance (100).

## Patentansprüche

1. Elektrisches Modul (1), das ausgelegt ist, um mit einer Leistungswelle (100) einer Turbomaschine für ein Luftfahrzeug verbunden zu sein, wobei das elektrische Modul (1) ausgelegt ist, um Leistung auf der Leistungswelle (100) zu entnehmen/einzuleiten, wobei das elektrische Modul (1) umfasst:
• eine elektrische Maschine (2), die ein Maschinengehäuse (20) umfasst, in dem ein Stator angebracht ist und ein Rotor, der ausgelegt ist, um mechanisch mit der Leistungswelle (100) verbunden zu sein, wobei das Maschinengehäuse (20), das eine zylindrische Form hat, sich entlang einer Zylinderachse (X) erstreckt,
• einen ersten elektrischen Wandler (3A), der in einem ersten Gehäuse (30A) angebracht ist,
• einen zweiten elektrischen Wandler (3B), der in einem zweiten Gehäuse (30B) angebracht ist, wobei der zweite Wandler (3B) unabhängig vom ersten Wandler (3A) ist,
• wobei das elektrische Modul **dadurch gekennzeichnet ist, dass** das erste Gehäuse (30A) und das zweite Gehäuse (30B) jeweils in Form eines Halbzylinders vorliegen, der sich gemäß der Zylinderachse (X) derart erstreckt, dass eine zylindrische Einheit gebildet wird, die in der Verlängerung des Maschinengehäuses (20) der elektrischen Maschine (2) angebracht ist, um den Platzbedarf des elektrischen Moduls (1) zu begrenzen.

2. Elektrisches Modul (1) nach Anspruch 1, wobei jedes Gehäuse (30A, 30B) einen gekrümmten Mantel (301A, 301B), eine Seitenabdeckung (302A, 302B) und eine Mittelabdeckung (303A, 303B) aufweist.

3. Elektrisches Modul (1) nach Anspruch 2, wobei die Mittelabdeckungen (303A, 303B) der Gehäuse (30A, 30B) in Kontakt positioniert sind.

4. Elektrisches Modul (1) nach einem der Ansprüche 1 bis 3, wobei jeder Wandler (3A, 3B) mindestens zwei Leistungswechselrichter (31A, 32A, 31B, 32B) aufweist und die elektrische Maschine (2) einen Stator aufweist, der mindestens vier Sterne (E1-E4) aufweist, die mit den Leistungswechselrichtern (31A, 32A, 31B, 32B) verbunden sind.

5. Elektrisches Modul (1) nach Anspruch 4, wobei, da die Sterne (E1-E4) winkelmäßig im Stator verteilt sind, die beiden Leistungswechselrichter (31A, 32A, 31B, 32B) eines Wandlers (3A, 3B) mit den Sternen (E1-E4) verbunden sind, mit denen sie fluchten.

6. Elektrisches Modul (1) nach Anspruch 4, wobei, da die Sterne (E1-E4) winkelmäßig im Stator verteilt sind, die beiden Leistungswechselrichter (31A, 32A, 31B, 32B) eines Wandlers (3A, 3B) mit Sternen (E1-E4) verbunden sind, die diametral gegenüberliegen.

7. Elektrisches Modul (1) nach einem der Ansprüche 1 bis 6, wobei jeder Wandler (3A, 3B) mindestens einen Kondensator (35A, 35B) in Form eines Halbzylinders aufweist.

8. Elektrisches Modul (1) nach einem der Ansprüche 1 bis 7, wobei die Wandler (3A, 3B) lösbar in dem elektrischen Modul (1) angebracht sind.

9. Elektrisches Modul (1) nach einem der Ansprüche 1 bis 8, wobei jeder elektrische Wandler (3A, 3B) mindestens einen Eingangsfilter (34A, 34B) aufweist.

10. Elektrisches Modul (1) nach Anspruch 9, wobei, da der Eingangsfilter (34A, 34B) eine Vielzahl von Induktivitäten umfasst, jeder elektrische Wandler (3A, 3B) mindestens eine Anschlussklemmenleiste (BORN) umfasst, die kreuzungsfrei mit den Induktivitäten verbunden ist.

11. Elektrisches Modul (1) nach einem der Ansprüche 4 bis 10, wobei jeder elektrische Wandler (3A, 3B) mindestens eine elektronische Schnittstellenkarte (39A, 39B) aufweist, die ausgelegt ist, um die Leistungswechselrichter (31A, 32A, 31B, 32B) zu steuern.

12. Verfahren zum Zusammenbauen eines elektrischen Moduls (1) nach einem der Ansprüche 1 bis 11, das die Schritte umfasst:
• Zusammenbauen des ersten Gehäuses (30A) des ersten Wandlers (3A) mit dem zweiten Gehäuse (30B) des zweiten Wandlers (3B), um eine zylindrische Einheit zu bilden, und
• Zusammenbauen der Einheit in der Verlängerung des Maschinengehäuses (20) der elektrischen Maschine (2).

13. Einheit aus einem elektrischen Modul (1) nach einem der Ansprüche 1 bis 11 und einer Leistungswelle (100) einer Turbomaschine für ein Luftfahrzeug, wobei der Rotor der elektrischen Maschine (2) mechanisch mit der Leistungswelle (100) verbunden ist, um Leistung auf der Leistungswelle (100) zu entnehmen/einzuleiten.

## Claims

1. Electrical module (1) configured to be connected to a power shaft (100) of an aircraft turbine engine, the electrical module (1) being configured to draw off power from/inject power into said power shaft (100), the electrical module (1) comprising:
- An electric machine (2) comprising a machine housing (20) wherein a stator and a rotor configured to be mechanically connected to the power shaft (100), the machine housing (20) having a cylindrical shape extending along a cylinder axis (X),
- A first electric converter (3A) mounted in a first housing (30A),
- A second electric converter (3B) mounted in a second housing (30B), the second converter (3B) being independent from the first converter (3A),
- Electrical module **characterized by** the fact that the first housing (30A) and the second housing (30B) are each in the shape of a half-cylinder extending along the cylinder axis (X) to form a cylindrical assembly which is mounted as an extension of the machine housing (20) of the electric machine (2) to limit the size of the electrical module (1).

2. Electrical module (1) according to claim 1 wherein each housing (30A, 30B) comprises a curved casing (301A, 301B), a side cover (302A, 302B) and a central cover (303A, 303B).

3. Electrical module (1) according to claim 2 wherein the central covers (303A, 303B) of the housings (30A, 30B) are positioned in contact.

4. Electrical module (1) according to any one of claims 1 to 3 wherein each converter (3A, 3B) comprises at least two power inverters (31A, 32A, 31B, 32B) and the electric machine (2) comprises a stator comprising at least four stars (E1-E4) connected to said power inverters (31A, 32A, 31B, 32B).

5. Electrical module (1) according to claim 4 wherein the stars (E1-E4) are distributed angularly in the stator, the two power inverters (31A, 32A, 31B, 32B) of a converter (3A, 3B) are connected to the stars (E1-E4) with which they are aligned.

6. Electrical module (1) according to claim 4 wherein the stars (E1-E4) are distributed angularly in the stator, the two power inverters (31A, 32A, 31B, 32B) of a converter (3A, 3B) are connected to stars (E1-E4) that are diametrically opposite.

7. Electrical module (1) according to any one of claims 1 to 6 wherein each converter (3A, 3B) comprises at least one capacitor (35A, 35B) in the shape of a half-cylinder.

8. Electrical module (1) according to any one of claims 1 to 7 wherein the converters (3A, 3B) are removably mounted in the electrical module (1).

9. Electrical module (1) according to any one of claims 1 to 8 wherein each electrical converter (3A, 3B) comprises at least one input filter (34A, 34B).

10. Electrical module (1) according to claim 9 wherein, the input filter (34A, 34B) comprising a plurality of inductances, each electrical converter (3A, 3B) comprises at least one terminal block (BORN) connected to the inductances without crossover.

11. Electrical module (1) according to any one of claims 4 to 10 wherein each electrical converter (3A, 3B) comprises at least one electronic interface card (39A, 39B) configured to control the power inverters (31A, 32A, 31B, 32B).

12. Method for assembling an electrical module (1) according to any one of claims 1 to 11, comprising steps of:
- assembling the first housing (30A) of the first converter (3A) with the second housing (30B) of the second converter (3B) in order to form a cylindrical assembly and
- assembling said assembly as an extension of the machine housing (20) of the electric machine (2).

13. Assembly of an electrical module (1), according to one of claims 1 to 11, and a power shaft (100) of an aircraft turbine engine, the rotor of the electric machine (2) being mechanically connected to the power shaft (100) to draw off power from/inject power into said power shaft (100).
